# EUROPÄISCHE PATENTSCHRIFT

(11) **EP 2 206 898 B1**
(45) Veröffentlichungstag und Bekanntmachung des Hinweises auf die Patenterteilung: **09.03.2016**
(21) Anmeldenummer: 09015224.0
(22) Anmeldetag: 09.12.2009
(51) Int. Cl.: F01N 9/00, F02B 37/18, F01N 3/20, F02D 41/00

(54) **Verfahren zur Nachbehandlung eines Abgasstroms einer mehrzylindrigen Brennkraftmaschine eines Fahrzeuges sowie Abgasnachbehandlungsvorrichtung**
Method for treating an exhaust gas flow of a multi-cylinder combustion engine of a vehicle and exhaust gas treatment device
Procédé de post-traitement d'un flux de gaz d'un moteur à combustion multi-cylindrique d'un véhicule ainsi qu'installation de post-traitement des gaz d'échappement

(30) Priorität: 13.01.2009 DE 102009004418
(43) Veröffentlichungstag der Anmeldung: 14.07.2010
(73) Patentinhaber: MAN Truck & Bus AG, 80995 München (DE)
(72) Erfinder: Lämmermann, Reinhard, 90547 Stein (DE); Pappenheimer, Andreas, 91972 Ellingen (DE)

(56) Entgegenhaltungen:
- WO-A2-2004/090297
- DE-A1-102004 032 589
- DE-A1-102006 049 392
- US-A- 4 467 602
- US-A1- 2004 255 576
- US-A1- 2007 074 513

## Beschreibung

Die Erfindung betrifft ein Verfahren zur Nachbehandlung eines Abgasstroms einer mehrzylindrigen Brennkraftmaschine eines Fahrzeuges nach dem Oberbegriff des Anspruchs 1 sowie eine Abgasnachbehandlungsvorrichtung nach dem Oberbegriff des Anspruchs 7.

Abgasnachbehandlungsvorrichtungen, mittels denen das von einer mehrzylindrigen Brennkraftmaschine abströmende Abgas so aufgereinigt wird, dass im Abgas vorhandene Schadstoffkonzentrationen vorgegebene Grenzwerte nicht überschreiten, sind allgemein bekannt. So ist beispielsweise aus der DE 10 2006 038 290 A1 ein Abgasnachbehandlungssystem zur Stickoxid- und Partikelreduzierung bei mit Luftüberschuss betriebenen Brennkraftmaschinen bekannt, bei der die Stickoxidreduzierung mittels eines eine selektive katalytische Reduktion (SCR) durchführenden SCR-Katalysators und die Partikelreduktion mittels eines Partikelabscheiders oder eines Partikelfilters erfolgt. Konkret wird hierbei den von der Brennkraftmaschine erzeugten und durch den Abgasstrang abströmenden Abgasen in einem motornahen Bereich ein Reduktionsmittel zudosiert. Bei diesem Reduktionsmittel handelt es sich um eine wässrige Harnstofflösung oder um Harnstoff in fester Form. Die Zumessung des Reduktionsmittels erfolgt in Abhängigkeit von Betriebsparametern der Brennkraftmaschine, gesteuert über eine Motorsteuereinheit, wobei über eine Düse die wässrige Harnstofflösung unmittelbar vor einem Hydrolysekatalysator in den Abgasstrom eingesprüht wird. Mittels des Hydrolysekatalysators wird die wässrige Harnstofflösung unter Vermeidung von Nebenprodukten zumindest teilweise in Ammoniak und Wasserdampf überführt, so dass anschließend in einem stromab des Hydrolysekatalysators angeordneten SCR-Katalysator die Stickoxidreduzierung durch Reaktion der Stickoxide mit dem Ammoniak erfolgt.

Bei heute in Fahrzeugen, insbesondere in Nutzfahrzeugen betriebenen Brennkraftmaschinen ist üblicherweise eine wenigstens einstufige Turboladeranordnung vorhanden, die mithilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbine des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, eine für die Hydrolyse des Reduktionsmittels ausreichende Abgastemperatur zur Verfügung zu stellen. Selbst wenn Hydrolysekatalysatoren eingesetzt werden, reicht das Temperaturniveau zumeist nicht aus. Aus diesem Grund ist in der DE 10 2006 038 290 A1 weiter vorgesehen, den von der Brennkraftmaschine kommenden Abgasstrom bereits vor der Turbine des Abgasturboladers in einen Abgashauptstrom, der über die Turbine geführt ist und über diese den Verdichter antreibt, und einen Abgasteilstrom aufzuteilen. Der Abgasteilstrom ist über einen Oxidationskatalysator geführt, der einerseits in der normalen Strömungsrichtung des Abgases Stickstoffmonoxid in Stickstoffdioxid umsetzt und andererseits, zum Beispiel im Motorbremsbetrieb, evtl. mit dem Abgasstrom in Richtung Brennkraftmaschine zurückströmenden Ammoniak bzw. zurückströmendes, noch nicht umgesetztes Reduktionsmittel oxidiert. Stromab zum Oxidationskatalysator schließt sich im Abgasteilstrom ein Absperrorgang an. Stromab zum Absperrorgang wird mit einer Zumesseinrichtung das Reduktionsmittel in den Abgasteilstrom zugeführt, das durch die im Abgasteilstrom herrschende relativ hohe Abgastemperatur und den der Zuführstelle nachgeordneten Hydrolysekatalysator, Ammoniak abspaltet. Parallel zu dem Abgasteilstrom wird der Abgashauptstrom über einen Oxidationskatalysator geführt, der wiederum im Abgas enthaltenes Stickstoffmonoxid zu Stickstoffdioxid oxidiert. Stromab zum Oxidationskatalysator im Abgashauptstrom und stromab zum Hydrolysekatalysator im Abgasteilstrom vereinen sich die parallel geführten Abgasströme wieder und durchströmen einen stromabgelegenen Partikelabscheider, in dem die angelagerten Rußpartikel mithilfe des in den Oxidationskatalysatoren erzeugten Stickstoffdioxids zu Kohlenmonoxid, Kohlendioxid, Stickstoff und Stickstoffmonoxid kontinuierlich umgesetzt werden. Dem Partikelabscheider ist wiederum ein SCR-Katalysator nachgeordnet, der im Wege der selektiven katalytischen Reduktion die im Abgas vorhandenen Stickoxide in der zuvor beschriebenen Weise in Stickstoff und Wasserdampf überführt.

Weiter wird in dieser DE 10 2006 038 290 A1 in Verbindung mit einer zweiflutigen Turbine, bei der die eine Turbinenflut von einer ersten Gruppe von Zylindern und die andere Turbinenflut von einer zweiten Gruppe von Zylindern mit Abgas beschickt wird, vorgeschlagen, den Abgasteilstrom von einer der beiden Fluten abzuzweigen. Die Zylinder der Flut, von der der Abgasteilstrom abzweigt, sollen dann mit anderen Motorparametern, das heißt mit anderen Kraftstoffeinspritzzeiten oder -mengen betrieben werden als die Zylinder der anderen Flut. Dadurch soll zum Beispiel in der Startphase oder im Niedriglastbereich durch eine Nacheinspritzung im Expansions- oder Ausschubtakt die Abgastemperatur angehoben werden können. Weitere Ausführungen werden hier nicht gemacht.

Weiter ist aus der DE 10 2004 032 589 B4 eine Brennkraftmaschine bekannt, bei der von der Brennkraftmaschine ein Abgasstrang zweiflutig abgezweigt ist, wobei beide Abgasleitungen als Rohabgasleitungen zu einer Turbine eines Abgasturboladers geführt sind. Von einer der beiden Rohabgasleitungen ist eine sogenannte Waste-Gate-Leitung abgezweigt, mittels der bei einem Überdruck in der Rohabgasleitung überschüssiges Abgas abgeblasen werden kann. Desweiteren ist von einer der beiden Rohabgasleitungen eine Bypassleitung abgezweigt, die es ermöglicht, das Abgasnachbehandlungselement zu umgehen.

Aus der DD 0153414 ist weiter eine Abgasführung für Mehrzylinderbrennkraftmaschinen mit einer Zylinderabschaltung und einer Abgasnachbehandlungsmöglichkeit bekannt, bei der die Abgasleitungen der abschaltbaren Zylinder in eine gesonderte Sammelleitung münden. Die Abgasleitungen der ständig arbeitenden Zylinder sind über eine Sammelleitung an einen Katalysator angeschlossen, dem ein Wäscher nachgeordnet ist, mit dem die Sammelleitung der abschaltbaren Zylinder direkt verbunden ist. Mit einem derartigen Aufbau soll der Katalysator als Abgasnachbehandlungselement kleiner ausgeführt werden können als bei solchen Aufbauten, bei dem sämtlicher Abgasstrom über den Katalysator geführt ist. Nachteiligerweise gelangt hier jedoch bei der befeuerten Betriebsweise der abschaltbaren Zylindergruppe das Abgas im wesentlichen ungereinigt in die Umgebung.

Weiter ist aus der DE 10 2004 034 314 A1 eine Brennkraftmaschine mit mehreren Zylindern bekannt, die einen Turbolader sowie einen ersten und einen zweiten Abgasstrang aufweist, wobei eine Turbine des Turboladers dem ersten Abgasstrang zugeordnet ist. Ein erhöhtes Drehmoment und eine erhöhte Leistung sollen dadurch erreicht werden, dass eine Umgehungs-Abgasleitung, ausgehend von wenigstens einem Zylinder, der dem ersten Abgasstrang zugeordnet ist, unter Umgebung des wenigstens einen Turboladers mit dem ersten Abgasstrang verbunden ist.

Aus der DE 196 18 169 C1 ist ein Abgasturbolader für eine Brennkraftmaschine bekannt, dessen Turbine ein Laufrad und ein Turbinengehäuse mit zwei durch eine Trennwand getrennten Einlaufkanälen aufweist, wobei von einem der Einlaufkanäle ein Bypasskanal abzweigt, in dem ein Bypassventil angeordnet ist und wobei über den Bypasskanal stromauf eines Laufradeintrittes Abgas von dem Einlaufkanal abgeführt werden kann. Das Bypassventil ist in der Trennwand angeordnet und die Strömungsverbindung wahlweise zwischen einem der beiden Einlaufkanäle oder gleichzeitig beiden Einlaufkanälen und dem Bypasskanal herstellbar oder unterbrechbar, wobei ein Abschnitt des Bypasskanals durch die Trennwand gebildet ist und in dem besagten Abschnitt Öffnungen zur strömungsmäßigen Verbindung der Einlaufkanäle mit dem Bypasskanal angeordnet sind. Die Strömungsverbindung zwischen den Einlaufkanälen und dem Bypasskanal ist über ein den Öffnungen zugeordnetes Schließelement steuerbar, wobei besagter Abschnitt des Bypasskanals als Zylinderhülse und das Schließelement als in dieser angeordneter Drehschieber ausgebildet ist. Der Drehschieber weist mit den Öffnungen in Überdeckung bringbare Strömungskanäle auf. Mit einem derartigen Aufbau soll der Aufstaudruck in den einzelnen Fluten möglichst variabel regelbar sein.

Aus der DE 198 57 234 C2 ist weiter eine Vorrichtung zur Abgasrückführung für eine aufgeladene Brennkraftmaschine bekannt, bei der ein Abgasturbolader mit einer Abgasturbine und einem Verdichter vorgesehen ist, wobei die Abgasturbine als zweiflutige Turbine ausgebildet ist. Die Kanäle der beiden Fluten sind asymmetrisch, mit einem kleineren und einem größeren Kanal ausgebildet. Die Abgasturbine weist zur Änderung des Abgasdurchsatzes eine variable Geometrie auf. Durch eine Regeleinrichtung ist der Druck in der Abgasrückführungsleitung derart steuerbar, dass dieser höher einstellbar ist als der Druck in der Ladeluftleitung nach dem Verdichter. Ein ähnlicher Aufbau ist auch aus der DE 101 52 804 A1 sowie aus der DE 10 2004 030 703 A1 und der DE 103 57 925 A1 bekannt.

Demgegenüber ist es Aufgabe der vorliegenden Erfindung, ein Verfahren zur Nachbehandlung eines Abgasstroms einer mehrzylindrigen Brennkraftmaschine eines Fahrzeuges, insbesondere eines Abgases einer mit Luftüberschuss betriebenen Brennkraftmaschine eines Nutzfahrzeuges, sowie eine Abgasnachbehandlungsvorrichtung zur Durchführung eines derartigen Verfahrens zur Verfügung zu stellen, mittels dem bzw. der eine Abgasnachbehandlung insbesondere in definierten Betriebszuständen, wie beispielsweise einem Leerlaufbetrieb oder einem Schwachlast- bzw. Teillastbetrieb der Brennkraftmaschine, bauteiltechnisch unaufwendig sowie steuerungs- und regelungstechnisch einfach durchgeführt und eine gewünschte Aufheiztemperatur der Abgasnachbehandlungselemente auf schnelle Weise erreicht werden kann.

Diese Aufgabe wird gelöst mit den Merkmalen der unabhängigen Ansprüche. Vorteilhafte Ausgestaltungen hierzu sind jeweils Gegenstand der darauf rückbezogenen Unteransprüche.

Erfindungsgemäß ist in Verbindung mit einem Verfahren bzw. einer Vorrichtung zur Nachbehandlung eines Abgasstroms einer mehrzylindrigen Brennkraftmaschine eine mehrere unterschiedlichen Gruppen von Zylindern aufweisende Brennkraftmaschine vorgesehen, welchen unterschiedlichen Zylindergruppen jeweils eine Luftzuführleitung und eine Abgasleitung zugeordnet ist. Die Abgasleitungen münden mehrflutig in eine dementsprechend mehrflutig ausgebildete Abgasturbine eines Abgasturboladers, wobei der Abgasturbine ein Abgasnachbehandlungselement nachgeschaltet ist. Besonders vorteilhaft ist eine Drossel- und/oder Absperreinrichtung, mittels der die Luftströmung durch die jeweiligen Luftzuführleitungen in der gewünschten Weise beeinflusst werden kann.

Mit der vorliegenden erfindungsgemäßen Lösung wird somit eine ladeluftseitige Androsselungs- bzw. Absperrmöglichkeit zur Verfügung gestellt, mittels der die Abgastemperaturen auf steuerungs- bzw. regelungstechnisch einfache Weise gesteigert werden können. So kann gemäß einer bevorzugten Ausführungsform ein der Abgasturbine nachgeschaltetes Abgasnachbehandlungselement, zum Beispiel ein Katalysator oder dergleichen, auch bei derartigen Niedriglast- bzw. Schwachlast-Betriebszuständen schnell auf die gewünschte Temperatur, insbesondere Light-Off-Temperatur, aufgeheizt werden. Besonders vorteilhaft lässt sich die erfindungsgemäße Lösung auch in Verbindung mit einer selektiven katalytischen Reduktion (SCR) verwenden, bei denen in einer Bypassleitung ein Hydrolysekatalysator angeordnet ist, der dadurch ebenfalls sehr schnell auf seine erforderliche Light-Off-Temperatur aufgeheizt werden kann, wie dies nachfolgend noch näher erläutert wird.

Insbesondere kann mit der erfindungsgemäßen Lösung auf eine einfache Weise eine solche Verfahrensführung bewerkstelligt werden, bei der in einem in Abhängigkeit von definierten Betriebsparametern der Brennkraftmaschine vorgegebenen Aufheizbetrieb, insbesondere im Leerlauf- oder Schwachlastbetrieb der Brennkraftmaschine, ein durch wenigstens eine sogenannte Aufheiz-Zylindergruppe gebildeter erster Teil der Zylindergruppen in einem vorgegebenen Maße befeuert betrieben wird, während ein anderer, durch wenigstens eine sogenannte Abschalt-Zylindergruppe gebildeter zweiter Teil der Zylindergruppen entweder mit einer gegenüber einem definierten Normalbetrieb und/oder gegenüber der wenigstens einen Aufheiz-Zylindergruppe zudosierten Kraftstoffmenge reduzierten Kraftstoffmenge teilbefeuert oder alternativ nicht-befeuert betrieben wird. Das heißt, dass zum Beispiel in Verbindung mit einer zweiflutigen Ausgestaltung mit zwei unterschiedlichen Zylindergruppen durch einfaches Androsseln bzw. Absperren einer der beiden Fluten in Kombination mit einer Zylinderabschaltung derselben auf einfachste Weise eine Temperaturerhöhung des Abgasstroms in der anderen, befeuert betriebenen Flut erzielt werden kann. Denn mit dieser erfindungsgemäßen Verfahrensführung kann sichergestellt werden, dass sich in der Abgasturbine keine bzw. fast keine kalte Ladeluft aus den Zylindern der unbefeuerten bzw. mengenreduzierten Flut mit dem heißen Abgas der befeuerten Flut vermischt.

Wie bereits zuvor geschildert, ist eine derartige Betriebsweise der Brennkraftmaschine, insbesondere in Verbindung mit einem Leerlauf- bzw. Schwachlastbetrieb der Brennkraftmaschine bevorzugt. Dieser Leerlauf- bzw. Schwachlastbetrieb entspricht dabei bevorzugt einem Brennkraftmaschinenbetrieb, bei dem in etwa 0 bis 60%, bevorzugt in etwa 0 bis 50%, der Volllast angefordert werden und/oder bei dem die Abgastemperatur in einer von der Abgasturbine wegführenden Turbinen-Abführleitung kleiner in etwa 300°C ist.

Unter einer befeuerten Betriebsweise wird dabei grundsätzlich jede Betriebsweise verstanden, bei der die entsprechenden Zylinder mit Kraftstoff beschickt werden, das heißt nicht nur eine Betriebsweise, bei der die entsprechenden Zylinder voll befeuert mit der im definierten Normalbetrieb vorgegebenen Kraftstoffmenge beschickt werden. So können die Zylinder betriebspunktabhängig mit unterschiedlichen Kraftstoffmengen beschickt und damit befeuert betrieben werden. Der befeuerte Betrieb umfasst daher ausdrücklich auch solche Betriebsweisen, bei denen die entsprechenden Zylinder mit einer gegenüber einem definierten Normalbetrieb reduzierteren Kraftstoffmenge beschickt werden, das heißt "teilbefeuert" betrieben werden. So ist gemäß einer besonders bevorzugten Verfahrensführung vorgesehen, dass die im Aufheiz-Betrieb in die wenigstens eine Abschalt-Zylindergruppe zudosierte Kraftstoffmenge um einen vorgegebenen Betrag, bevorzugt um wenigstens die Hälfte kleiner ist als die in die wenigstens eine Aufheiz-Zylindergruppe zudosierte Kraftstoffmenge. Dadurch wird sichergestellt, dass die größere Kraftstoffmenge in der wenigstens einen Aufheiz-Zylindergruppe verbrannt wird, während eine demgegenüber niedrigere bzw. kleinere Kraftstoffmenge in der wenigstens einen Abschalt-Zylindergruppe verbrannt wird, so dass die zuvor geschilderten Vorteile bei der zur Verfügungstellung eines heißen Abgasstroms erzielt werden. Beispielsweise könnte im Falle zweier Zylindergruppen eine Aufteilung der Kraftstoffmenge von 90% : 10% oder von 80% : 20% zugunsten der wenigstens einen Aufheiz-Zylindergruppe, um nur zwei beliebige Beispiele zu nennen, vorgesehen sein.

Alternativ oder zusätzlich kann im Aufheiz-Betrieb auch eine solche Zudosierung der Kraftstoffmenge vorgesehen werden, dass der Drehmomentbeitrag der wenigstens einen Abschalt-Zylindergruppe am Motordrehmoment kleiner ist als der der wenigstens einen Aufheiz-Zylindergruppe. Gemäß einer besonders bevorzugten konkreten Ausgestaltung hierzu ist vorgesehen, dass der Drehmomentbeitrag der wenigstens einen Aufheiz-Zylindergruppe bevorzugt in etwa zwischen 70% bis 100% des Motordrehmomentes beträgt und dementsprechend der Drehmomentbeitrag der wenigstens einen Abschalt-Zylindergruppe in etwa zwischen 30% bis 0% liegt.

An dieser Stelle sei auch nochmals ausdrücklich erwähnt, dass unter den vorgenannten erfindungsgemäßen Bedingungen auch ein solcher befeuerter Betrieb der wenigstens einen Aufheiz-Zylindergruppe möglich ist, bei der diese mit einer gegenüber einem definierten Normalbetrieb geringeren Kraftstoffmenge befeuert betrieben wird, solange im Aufheiz-Betrieb sichergestellt ist, dass die demgegenüber in die wenigstens eine Abschalt-Zylindergruppe zudosierte Kraftstoffmenge kleiner ist.

Die Drossel- und/oder Absperreinrichtung, mittels der die Luftströmung durch die Luftzuführleitungen beeinflussbar ist, ist durch ein jeder Luftzuführleitung zugeordnetes Luftzufuhr-Absperrelement gebildet, so dass im Aufheiz-Betrieb die der wenigstens einen Abschalt-Zylindergruppe zugeordnete Luftzuführleitung mittels wenigstens eines Luftzuführ-Absperrelementes wenigstens zum Teil abgesperrt werden kann. In diesem Aufheiz-Betrieb ist ferner die der wenigstens eine Aufheiz-Zylindergruppe zugeordnete Luftzuführleitung mittels wenigstens eines Luftzuführ-Absperrelementes wenigstens zum Teil freigegeben, das heißt somit ausdrücklich auch androsselbar. Dadurch lässt sich eine Verfahrensführung bewerkstelligen, mittels der eine definierte Menge eines heißen Abgasstroms zu der Abgasturbine strömt. Gemäß einer besonders bevorzugten Verfahrensführung ist jedoch im Aufheiz-Betrieb vorgesehen, dass die der wenigstens eine Abschaltzylindergruppe zugeordnete Luftzuführleitung mittels des dieser zugeordneten Luftzuführ-Absperrelementes im Wesentlichen vollständig abgesperrt ist und die der wenigstens einen Aufheiz-Zylindergruppe zugeordnete Luftzuführleitung mittels des dieser zugeordneten Luftzuführ-Absperrelementes wenigstens zum Teil, bevorzugt vollständig freigegeben wird, so dass im Wesentlichen lediglich der heiße Abgasstrom aus der wenigstens einen Aufheiz-Zylindergruppe zu der Abgasturbine strömt.

Der Abgasturbolader weist weiter in einer üblichen Weise bevorzugt einen Luftverdichter auf, mittels der insbesondere die der Brennkraftmaschine zugeführte Verbrennungsluft verdichtet wird. Dieser Luftverdichter ist bevorzugt im Luftzuführstrang vor der Aufgabelung desselben in die mehren Luftzuführleitungen angeordnet.

Gemäß der Erfindung ist von wenigstens einer der Abgasleitungen, bevorzugt von allen Abgasleitungen, eine vorzugsweise mittels eines Abgasrückführ-Absperrelementes absperrbare Rückführleitung zu der derselben Zylindergruppe zugeordneten Luftzufuhrleitung rückgeführt. Die jeweiligen Abgasrückführ- und/oder Luftzufuhr-Absperrelemente sind dabei vorzugsweise mit einer Steuer- und/oder Regeleinrichtung gekoppelt, die die Absperrelemente entsprechend vorgegebener, definierter Betriebsparameter der Brennkraftmaschine, insbesondere in Abhängigkeit von definierten Abgasnachbehandlungselement-Aufheizparametern und/oder Abgasrückführparametern und/oder Ansaugluftparametern, so ansteuert, dass diese die ihnen jeweils zugeordneten Leitungen entweder wenigstens teilweise sperren oder wenigstens teilweise freigeben. Mit einer derartigen baulichen Ausgestaltung kann erzielt werden, dass im Aufheiz-Betrieb ein definierter Rückstrom von der der wenigstens einen Abschalt-Zylindergruppe zugeordneten Abgasleitung zu der derselben Abschalt-Zylindergruppe zugeordneten Luftzufuhrleitung möglich ist. Für den Fall, dass die wenigstens eine Abschalt-Zylindergruppe nicht-befeuert betrieben wird, wird dabei im Wesentlichen Luft umgepumpt. Für den Fall des wenigstens teilbefeuerten Betriebs im zuvor genannten Sinne, können definierte Abgasrückführraten eingestellt werden.

Des Weiteren kann in Verbindung mit dieser Abgasrückführung im AufheizBetrieb ein Rückstrom von der der wenigstens einen Aufheiz-Zylindergruppe zugeordneten Abgasleitung zu der derselben Aufheiz-Zylindergruppe zugeordneten Luftzuführleitung gemäß einer besonders bevorzugten Verfahrensführung in Abhängigkeit vom gewünschten Abgasrückführungsgrad wenigstens teilweise gesperrt sein. Dadurch wird sichergestellt, dass ein relativ großer heißer Abgasmassenstrom in Richtung Abgasturbine bzw. Abgasnachbehandlungselement abströmt. Die Menge des rückgeführten, heißen Abgasstroms kann dadurch ebenfalls auf einfache Weise in Abhängigkeit von den jeweils gegebenen Betriebsparametern festgelegt werden.

Gemäß einer weiteren besonders bevorzugten Erfindungsvariante kann auch vorgesehen sein, dass im Aufheiz-Betrieb eine in Abhängigkeit von definierten Aufheizparametern vorgegebene Menge des von der wenigstens einen Aufheiz-Zylindergruppe abströmenden heißen Abgasstroms über eine Bypassleitung an der Abgasturbine vorbei zum der Abgasturbine nachgeschalteten Abgasnachbehandlungselement strömt. Denn mittels einer Bypassleitung kann zum Beispiel im Leerlauf- bzw. im Schwachlastbetrieb der Brennkraftmaschine ein definierter Teilstrom des die Brennkraftmaschine verlassenden heißen Rohabgasstroms an der Abgasturbine vorbeigeleitet und somit durch diese nicht abgekühlt werden, so dass ein in der Abgasturbine nachgeschaltetes Abgasnachbehandlungselement, zum Beispiel ein Katalysator oder dergleichen, auch bei derartigen Betriebszuständen schnell auf die gewünschte Temperatur, insbesondere Light-Off-Temperatur, aufgeheizt werden kann. Besonders vorteilhaft ist diese erfindungsgemäße Variante in Verbindung mit einer selektiven katalytischen Reduktion (SCR), bei der in der Bypassleitung ein Hydrolysekatalysator angeordnet ist, der dadurch sehr schnell auf seine erforderliche Light-Off-Temperatur aufgeheizt werden kann, so dass die selektive katalytische Reduktion der Stickoxide in dem der Abgasturbine bzw. der Bypassleitung nachgeschalteten SCR-Katalysator auf effektive und zuverlässige sowie funktionssichere Weise durchgeführt werden kann.

Im Falle des über die Bypassleitung abgezweigten Abgasstroms ist zudem bevorzugt vorgesehen, dass eine in einer von der Abgasturbine wegführenden Turbinen-Abführleitung angeordnete Motorbremsklappe wenigstens teilweise geschlossen wird.

Die vorliegende Erfindung kann bevorzugt in Verbindung mit jeder mehrzylindrigen Brennkraftmaschine Anwendung finden. Besonders bevorzugt ist die Anwendung in Verbindung mit einer Brennkraftmaschine oder einer Zylinderbank der Brennkraftmaschine, die zweiflutig ausgebildet sind, so dass einer ersten Zylindergruppe eine erste Luftzuführleitung sowie eine erste Abgasleitung und einer zweiten Zylindergruppe eine zweite Luftzuführleitung sowie eine zweite Abgasleitung zuordenbar ist.

Die Erfindung wird nachfolgend anhand einer Zeichnung näher erläutert.

Es zeigen:
- Fig. 1: schematisch eine erfindungsgemäße Verfahrensführung bzw. Vorrichtung gemäß einer ersten Ausführungsform; und
- Fig. 2: schematisch eine erfindungsgemäße Verfahrensführung bzw. Abgasnachbehandlungsvorrichtung gemäß einer zweiten Ausführungsform.

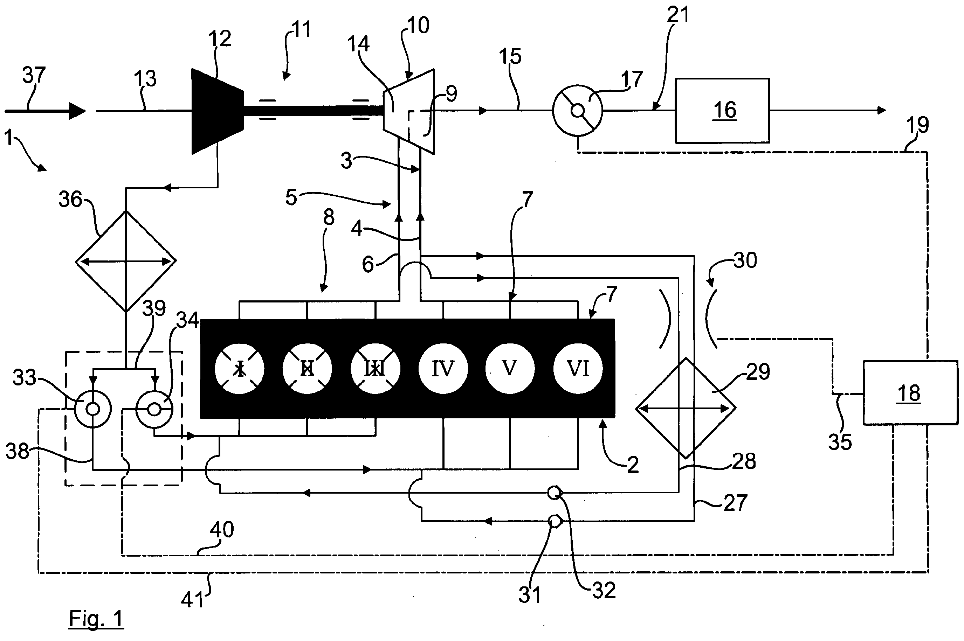

In der Fig. 1 ist schematisch eine erste Ausführungsform einer erfindungsgemäßen Abgasnachbehandlungsvorrichtung 1 für eine hier sechszylindrige Reihenbrennkraftmaschine 2 gezeigt. Von dieser Brennkraftmaschine 2 zweigt eine erste Abgasflut 3 mittels einer ersten Abgasleitung 4 und eine zweite Abgasflut 5 mit einer zweiten Abgasleitung 6 ab, wobei eine durch den Zylinder IV, V, VI gebildete erste Zylindergruppe 7 der Abgasleitung 4 zugeordnet ist, während eine durch die Zylinder I, II, III gebildete zweite Zylindergruppe 8 der zweiten Abgasleitung 6 zugeordnet ist.

Die erste Abgasleitung 4 mündet in eine ersten Turbinenflut 9 einer Abgasturbine 10 eines Abgasturboladers 11, der weiter einen Luftverdichter 12 in einer Ansaugluftleitung 13 aufweist. In analoger Weise mündet die zweite Abgasleitung 6 in eine zweite Turbinenflut 14 der Abgasturbine 10.

Von der Abgasturbine 10 führt eine Turbinen-Abführleitung 15 zu einem Abgasnachbehandlungselement 16, wobei in der Turbinen-Abführleitung 15 weiter eine Motorbremsklappe 17, auch Motorstauklappe genannt, angeordnet ist, die mittels einer Steuereinrichtung 18 entsprechend vorgegebener Steuer- und/oder Regelparameter ansteuerbar bzw. regelbar ist. Sämtliche Steuerleitungen sind hier strichpunktiert eingezeichnet, um diese leichter von den gas- bzw. mediumführenden Rohrleitungen der Abgasnachbehandlungsvorrichtung 1 unterscheiden zu können. Die Steuerleitung von der Steuereinrichtung 18 zur Motorbremsklappe 17 ist hier mit dem Bezugszeichen 19 bezeichnet.

Von jeder der beiden Abgasleitungen 4, 6 zweigt stromauf der Abgasturbine 10 jeweils eine Abgasrückführleitung 27, 28 ab, die jeweils stromauf der Brennkraftmaschine 2 in eine Luftzuführleitung 38 bzw. 39 münden. Wie dies der Fig. 1 entnommen werden kann, gabelt sich die Ansaugluftleitung 13 stromab des Luftverdichters 12 und stromab eines Ladeluftkühlers 36 in die beiden Luftzuführleitungen 38, 39 auf, wobei die Luftzuführleitung 38 als erste Luftzuführleitung der ersten Zylindergruppe 7 und damit der ersten Abgasleitung 4 und die zweite Luftzuführleitung 39 der zweiten Zylindergruppe 7 und damit der zweiten Abgasleitung 6 zugeordnet ist.

Die beiden Abgasrückführleitungen 27, 28 können in üblicher Weise über einen Kühler 29 geführt sein.

Ferner ist in jede der Abgasrückführleitungen 27, 28 optional ein Rückschlagventil 31, 32 integriert, die in üblicher Weise verhindern, dass rückgeführtes Gas bzw. Abgas zurückströmen kann.

Wie dies der Fig. 1 weiter entnommen werden kann, ist in die Abgasrückführleitung 27, 28 auch jeweils ein äußerst schematisch dargestelltes Drosselelement 30 integriert, mittels denen die Abgasrückführleitungen freigegeben bzw. abgesperrt bzw. gedrosselt werden können.

Das Drosselelement 30 kann selbstverständlich auch stromauf des Kühlers 29 angeordnet sein. Das gleichzeitig als Absperrelement fungierende Drosselelement 30 ist über eine Steuerleitung 35 mit der Steuereinrichtung 18 verbunden. An dieser Stelle ist ausdrücklich erwähnt, dass das Drosselelement 30 bevorzugt separate Absperrorgane bzw. Drosselorgane für jede der Abgasrückführleitungen 27, 28 aufweist, die separat und unabhängig voneinander mittels der Steuereinrichtung 18 angesteuert werden können.

In den beiden Luftzuführleitungen 38, 39 ist jeweils ein Luftzufuhr-Absperrelement 33, 34 angeordnet, das als Drossel- und/oder Absperreinrichtung fungiert. Diese beiden Luftzufuhr-Absperrelemente sind über Steuerleitungen 40, 41 wieder mit der Steuereinrichtung 18 verbunden.

Die Funktionsweise der erfindungsgemäßen Abgasnachbehandlungsvorrichtung 1 wird nun gemäß der Ausführungsform nach Fig. 1 näher erläutert:

Wird im Leerlaufbetrieb bzw. im Niedriglastbetrieb der Brennkraftmaschine, bei dem zum Beispiel in etwa 50% der möglichen Volllast angefordert werden, Luft 37 angesaugt, gelangt diese über die Ansaugluftleitung 13 zu den beiden Luftzuführleitungen 38, 39.

Um nun sicherzustellen, dass im genannten Niedriglastbetrieb der Brennkraftmaschine ein ausreichend heißer Abgasstrom zum Abgasnachbehandlungselement 16 strömen kann, wird hier beispielhaft das Luftzuführ-Absperrelement 34 der zweiten Luftzuführleitung 39 geschlossen bzw. wenigstens teilweise geschlossen, während das Luftzufuhr-Absperrelement 33 der Luftzuführleitung 38 geöffnet ist, so dass der Großteil der angesaugten und verdichteten Luft in die Zylinder IV, V, VI der ersten Zylindergruppe 7 strömt, die als sogenannte Aufheiz-Zylindergruppe mittels einer vorgegebenen Kraftstoffmenge befeuert betrieben wird.

Die Zylinder I, II, III der zweiten Zylindergruppe 8 werden dagegen je nach dem Beschickungsgrad mit Luft über die zweite Luftzuführleitung 39 abgeschaltet oder nicht abgeschaltet betrieben und bilden eine sogenannte Abschalt-Zylindergruppe aus. Diese Abschalt-Zylindergruppe bzw. zweite Zylindergruppe 8 wird dabei wahlweise nicht-befeuert oder aber auch lediglich teilbefeuert betrieben, und zwar vorteilhaft mit einer gegenüber einem definierten Normalbetrieb und gegenüber einer der wenigstens einen Aufheiz-Zylindergruppe zudosierten Kraftstoffmenge reduzierten Kraftstoffmenge, so dass der Abgasturbine 10 keine bzw. fast keine kalte Ladeluft aus den Zylindern I, II, III der nicht-befeuert bzw. mengenreduzierten Flut zugeführt wird und damit im Wesentlichen lediglich der heiße Abgasstrom aus der Aufheiz-Zylindergruppe bzw. ersten Zylindergruppe 7 zu der Abgasturbine 10 und weiter zum Abgasnachbehandlungselement 16 strömt.

Je nach Betriebsweise kann dabei zusätzlich durch entsprechende Öffnung des Drosselelementes 30 sichergestellt werden, dass die gewünschte Menge an Gas von den beiden Abgasleitungen 4, 6 zu den beiden Luftzuführleitungen 38, 39 rückgeführt wird. Im eben geschilderten Aufheiz-Betrieb mit nicht-befeuerter oder teilbefeuerter bzw. mengenreduzierter Betriebsweise der zweiten Zylindergruppe 8 ist bevorzugt vorgesehen, das Drosselelement 30 in Verbindung mit der Abgasrückführleitung 28 zu öffnen, so dass in dieser nicht-befeuert bzw. mengenreduziert befeuerten ersten Flut das Gas im Wesentlichen im Kreis umgepumpt wird, während das Drosselelement 30 bezüglich der Abgasrückführleitung 27 bevorzugt wenigstens teilweise gesperrt ist, so dass eine gewünschte Menge an heißem Abgas über die Abgasturbine 10 zu dem Abgasnachbehandlungselement 16 strömen kann.

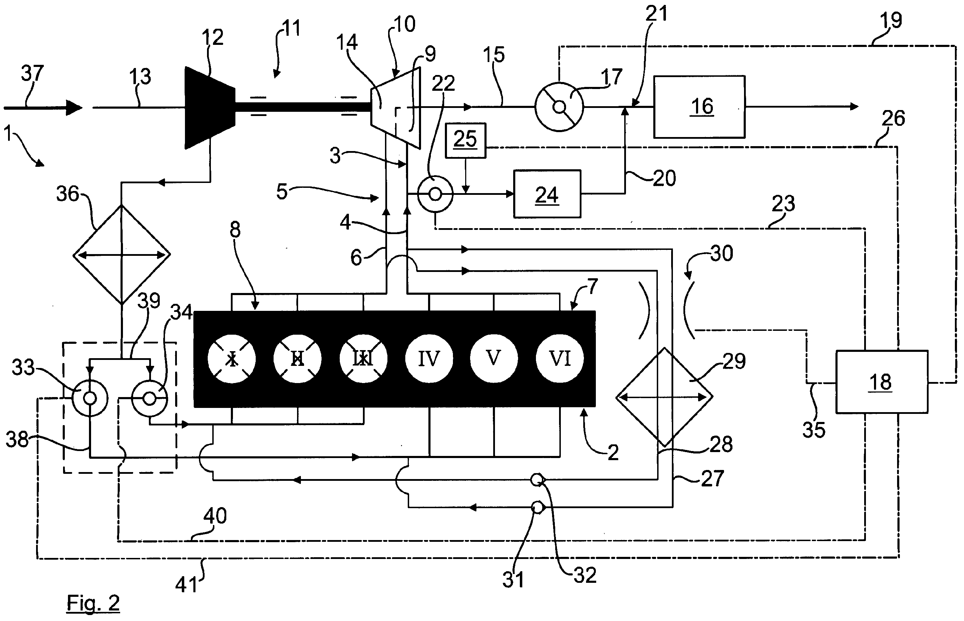

In der Fig. 2 ist eine alternative Ausführungsform der erfindungsgemäßen Abgasnachbehandlungsvorrichtung 1 gezeigt, die so weit nicht anders beschrieben, gleicher Bauart bzw. gleicher Funktion wie die Ausführungsform nach Fig. 1 ist. Im Unterschied zur Ausgestaltung nach Fig. 1 ist hier zusätzlich vorgesehen, dass von der ersten Abgasflut 3 bzw. der ersten Abgasleitung 4 stromauf der Abgasturbine 10 eine Bypassleitung 20 abzweigt, die stromab der Motorbremsklappe 17 bzw. stromauf des zum Beispiel als SCR-Katalysator ausgebildeten Abgasnachbehandlungselements 16 an einer Einmündposition 21 in die Turbinenabführleitung 15 einmündet. In dieser Bypassleitung 20 ist ein zum Beispiel durch eine Absperrklappe gebildetes Bypass-Absperrelement 22 angeordnet, das über eine Steuerleitung 23 von der Steuer- und Regeleinrichtung 18 entsprechend vorgegebener Steuer- und/oder Regelparameter angesteuert bzw. geregelt wird. Stromab des Bypass-Absperrelementes 22 ist ein Hydrolysekatalysator 24 in der Bypassleitung 20 stromauf der Einmündposition 21 angeorndet.

Des Weiteren umfasst die Abgasnachbehandlungsvorrichtung 1 eine Zumesseinrichtung 25, mittels der dem durch die Bypassleitung 20 strömenden Bypass-Abgasstrom stromauf des Hydrolysekatalysators 24 eine vorgegebene Menge eines Reduktionsmittels, zum Beispiel eine wässrige Harnstofflösung, zu definierten Zeiten zugemessen wird. Die Zumessung erfolgt ebenfalls wiederum gesteuert bzw. geregelt mittels der Steuereinrichtung 18 und einer Steuerleitung 26.

An dieser Stelle sei ausdrücklich erwähnt, dass die Abzweigung bauteiltechnisch einfach lediglich von der Abgasleitung 4 und damit von der ersten Zylindergruppe 7 erfolgt, so dass im zuvor geschilderten Aufheiz-Betrieb zudem vorgesehen werden kann, den heißen Abgasstrom aus der ersten Zylindergruppe 7 an der Abgasturbine 10 vorbei zum Abgasnachbehandlungselement 16 zu führen, wodurch dieses ebenso wie der Hydrolysekatalysator 24 in der Bypassleitung, der jedoch lediglich optional ist, sehr schnell auf die gewünschte Temperatur aufgeheizt werden kann. In diesem Bypass-Betrieb ist die Motorbremsklappe wenigstens teilweise, bevorzugt vollständig geschlossen, so dass ein möglichst großer Abgasmassenstrom über die Bypass-Leitung 20 strömen kann.

Eine Abzweigung der Bypass-Leitung 20 von der zweiten Abgasleitung 6 wäre grundsätzlich ebenfalls möglich und zwar sowohl alternativ als auch zusätzlich, wobei jedoch insbesondere in Verbindung mit der zusätzlichen Abzweigung ein erhöhter Bauteilbedarf erforderlich wäre, der mit der einfachen Abzweigung von lediglich derjenigen Abgasleitung 4, die der befeuert betriebenen ersten bzw. Aufheizzylindergruppe 7 zugeordnet ist, vorteilhaft vermieden werden kann.

## Patentansprüche

1. Verfahren zur Nachbehandlung eines Abgasstroms einer mehrzylindrigen Brennkraftmaschine eines Fahrzeuges, insbesondere eines Nutzfahrzeuges,
mit einer mehrere unterschiedliche Gruppen von Zylindern (6, 7) aufweisenden Brennkraftmaschine (2), denen jeweils eine Luftzuführleitung (38, 39) und eine Abgasleitung (4, 6) zugeordnet ist, wobei die Abgasleitungen (4, 6) mehrflutig in eine dementsprechend mehrflutig ausgebildete Abgasturbine (10) eines Abgasturboladers (11) münden, der ein Abgasnachbehandlungselement (16) nachgeschaltet ist,
wobei in einem in Abhängigkeit von definierten Betriebsparametern der Brennkraftmaschine (2) vorgegebenen Aufheiz-Betrieb der Brennkraftmaschine, insbesondere im Leerlauf- oder Schwachlastbetrieb der Brennkraftmaschine, ein durch wenigstens eine Aufheiz-Zylindergruppe (7) gebildeter erster Teil der Zylindergruppen in einem vorgegebenen Maße befeuert betrieben wird, während ein anderer durch wenigstens eine Abschalt-Zylindergruppe (8) gebildeter zweiter Teil der Zylindergruppen entweder mit einer gegenüber einem definierten Normalbetrieb und/oder gegenüber einer der wenigstens einen Aufheiz-Zylindergruppe zudosierten Kraftstoffmenge reduzierten Kraftstoffmenge teilbefeuert oder nicht-befeuert betrieben wird,
**dadurch gekennzeichnet,**
**dass** im Aufheiz-Betrieb die der wenigstens einen Abschalt-Zylindergruppe (8) zugeordnete Luftzuführleitung (39) mittels wenigstens eines Luftzuführ-Absperrelementes (34) wenigstens zum Teil abgesperrt und die der wenigstens einen Aufheiz-Zylindergruppe (7) zugeordnete Luftzuführleitung (38) mittels wenigstens eines Luftzuführ-Absperrelementes (33) wenigstens zum Teil freigegeben wird, so dass eine definierte Menge eines heißen Abgasstroms zu der Abgasturbine (10) strömt, wobei vorgesehen ist, dass im Aufheiz-Betrieb die der wenigstens einen Abschalt-Zylindergruppe (8) zugeordnete Luftzuführleitung (39) mittels des dieser zugeordneten Luftzuführ-Absperrelementes (34) im Wesentlichen vollständig abgesperrt und die der wenigstens einen Aufheiz-Zylindergruppe (7) zugeordnete Luftzuführleitung (38) mittels des dieser zugeordneten Luftzuführ-Absperrelementes (33) wenigstens zum Teil freigegeben wird, so dass im Wesentlichen lediglich der heiße Abgasstrom aus der wenigstens einen Aufheiz-Zylindergruppe (7) zu der Abgasturbine (10) strömt und dass im Aufheiz-Betrieb ein Rückstrom von der der wenigstens einen Abschalt-Zylindergruppe (8) zugeordneten Abgasleitung (6) zu der derselben Abschalt-Zylindergruppe (8) zugeordneten Luftzuführleitung (39) freigegeben ist und/oder ein Rückstrom von der der wenigstens einen Aufheiz-Zylindergruppe (7) zugeordneten Abgasleitung (4) zu der derselben Aufheiz-Zylindergruppe (7) zugeordneten Luftzuführleitung (38) wenigstens teilweise gesperrt ist.

2. Verfahren nach Anspruch 1, **dadurch gekennzeichnet, dass** die im Aufheiz-Betrieb in die wenigstens eine Abschalt-Zylindergruppe (8) zudosierte Kraftstoffmenge um einen definierten Betrag, insbesondere um wenigstens die Hälfte kleiner ist als die in die wenigstens eine Aufheiz-Zylindergruppe (7) zudosierte Kraftstoffmenge.

3. Verfahren nach einem der Ansprüche 1 oder 2, **dadurch gekennzeichnet, dass** der Drehmomentbeitrag der wenigstens einen Abschalt-Zylindergruppe (8) am Motordrehmoment kleiner ist als der der wenigstens einen Aufheiz-Zylindergruppe (7), wobei der Drehmomentbeitrag der wenigstens einen Aufheiz-Zylindergruppe (7) bevorzugt in etwa 70% bis 100% des Motordrehmomentes beträgt und dementsprechend der Drehmomentbeitrag der wenigstens einen Abschalt-Zylindergruppe (8) in etwa zwischen 30% bis 0% liegt.

4. Verfahren nach einem der Ansprüche 1 bis 3, **dadurch gekennzeichnet, dass** im Aufheiz-Betrieb eine in Abhängigkeit von definierten Aufheizparametern vorgegebene Menge des von der wenigstens einen Aufheiz-Zylindergruppe (7) abströmenden heißen Abgasstroms über eine Bypassleitung (20) an der Abgasturbine (10) vorbei zum der Abgasturbine (10) nachgeschalteten Abgasnachbehandlungselement (16) strömt.

5. Verfahren nach Anspruch 4, **dadurch gekennzeichnet, dass** in der Bypassleitung (20) wenigstens ein Hydrolysekatalysator (24) angeordnet ist,
dass dem Abgasstrom in der Bypassleitung (20) stromauf des wenigstens einen Hydrolysekatalysators (24) mittels einer Reduktionsmittel-Zumesseinrichtung (25) zu vorgegebenen Zeiten eine vorgegebene Menge eines Reduktionsmittels zugemessen wird, und
dass das wenigstens eine der Abgasturbine (10) nachgeschaltete Abgasnachbehandlungselment (16) durch wenigstens einen SCR-Katalysator gebildet ist, in dem eine Stickoxidreduzierung mittels selektiver katalytischer Reduktion (SCR) stattfindet.

6. Verfahren nach Anspruch 4 oder Anspruch 5, **dadurch gekennzeichnet, dass** im Falle eines über die Bypassleitung (20) abgezweigten Abgasstroms eine in einer von der Abgasturbine (10) wegführenden Turbinen-Abführleitung (15) angeordnete Motorbremsklappe (17) wenigstens teilweise geschlossen wird.

7. Vorrichtung zur Nachbehandlung eines Abgasstroms einer mehrzylindrigen Brennkraftmaschine eines Fahrzeuges, zur Durchführung eines Verfahrens gemäß einem der vorhergehenden Verfahrensansprüche,
mit einer mehrere unterschiedliche Gruppen (7, 8) von Zylindern aufweisenden Brennkraftmaschine (2), denen jeweils eine Luftzuführleitung (38, 39) und eine Abgasleitung (4, 6) zugeordnet ist, wobei die Abgasleitungen (4, 6) mehrflutig in eine dementsprechend mehrflutig ausgebildete Abgasturbine (10) eines Abgasturboladers (11) münden, der ein Abgasnachbehandlungselement (16) nachgeschaltet ist,
**dadurch gekennzeichnet, dass**
eine Drossel- und/oder Absperreinrichtung vorgesehen ist, mittels der die Luftströmung durch die Luftzufuhrleitungen (38, 39) beeinflussbar ist,
wobei bevorzugt vorgesehen ist, dass jeder Luftzuführleitung (38, 39) ein Luftzufuhr-Absperrelement (33, 34) als Drossel- und/oder Absperreinrichtung zugeordnet ist und dass von wenigstens einer der Abgasleitungen (4, 6), bevorzugt von allen Abgasleitungen, eine vorzugsweise mittels eines Abgasrückführ-Absperrelementes (30) absperrbare Abgasrückführleitung (27, 28) zu der derselben Zylindergruppe (7, 8) zugeordneten Luftzuführleitung rückgeführt ist.

8. Vorrichtung nach Anspruch 7, **dadurch gekennzeichnet, dass** eine Steuer- und/oder Regeleinrichtung (18) vorgesehen ist, die die Abgasrückführ- und/oder Luftzufuhr-Absperrelemente (30, 33, 34) entsprechend vorgegebener Betriebsparameter der Brennkraftmaschine (2), insbesondere in Abhängigkeit von definierten Abgasnachbehandlungselement-Aufheizparametern und/oder Abgasrückführparametern und/oder Ansaugluftparametern, so ansteuert, dass diese die ihnen jeweils zugeordneten Leitungen wenigstens teilweise sperren oder wenigstens teilweise freigeben.

9. Vorrichtung nach einem der Ansprüche 7 oder 8, **dadurch gekennzeichnet, dass** das Luftzuführleitungs-Absperrelement (33, 34) stromauf der jeweiligen Einmündstelle der Abgasrückführleitung (27, 28) in die jeweilige Luftzuführleitung (38, 39) angeordnet ist.

10. Vorrichtung nach einem der Ansprüche 7 bis 9, **dadurch gekennzeichnet, dass** von wenigstens einer der Abgasleitungen (4, 6), bevorzugt von wenigstens einer einer Aufheiz-Zylindergruppe (7) zugeordneten Abgasleitung (4), eine mittels eines Abzweig-Absperrelementes (22) absperrbare Bypassleitung (20) stromauf der Abgasturbine (10) abzweigt und stromab der Abgasturbine (10) sowie stromauf des Abgasnachbehandlungselementes (16) in eine von der Abgasturbine (10) zum Abgasnachbehandlungselement (16) geführte Turbinen-Abführleitung (15) einmündet, wobei in der Turbinen-Abführleitung (15) bevorzugt ein Abführleitungs-Absperrelement (17), insbesondere eine Motorbremsklappe, und/oder in der Bypassleitung (20) bevorzugt wenigstens ein Bypassleitungs-Abgasnachbehandlungselement (24) angeordnet ist.

11. Vorrichtung nach Anspruch 10, **dadurch gekennzeichnet, dass** das Bypass-Abgasnachbehandlungselement (24) durch wenigstens einen Hydrolyse-Katalysator gebildet ist,
dass eine Zumesseinrichtung (25) für ein Reduktionsmittel vorgesehen ist, mittels der dem Bypassabgasstrom stromauf des wenigstens einen Hydrolyse-Katalysators ein Reduktionsmittels zumessbar ist, und
dass das wenigstens eine der Abgasturbine (10) nachgeschaltete Abgasnachbehandlungselement (16) durch wenigstens einen SCR-Katalysator gebildet ist.

## Claims

1. A method for the aftertreatment of an exhaust-gas flow of a multi-cylinder internal combustion engine of a vehicle, in particular of a utility vehicle,
having an internal combustion engine (2) which has multiple different groups of cylinders (6, 7) which are assigned in each case one air supply line (38, 39) and one exhaust line (4, 6), wherein the exhaust lines (4, 6) issue, in multi-channel fashion, into an exhaust-gas turbine (10), which is of correspondingly multi-channel form, of an exhaust-gas turbocharger (11), downstream of which there is connected an exhaust-gas aftertreatment element (16),
wherein, in a warm-up mode of the internal combustion engine, which is predefined in a manner dependent on defined operating parameters of the internal combustion engine (2), in particular in idle or low-load operation of the internal combustion engine, a first part of the cylinder groups, formed by at least one warm-up cylinder group (7), is operated in fired fashion to a predefined extent, whereas another, second part of the cylinder groups, formed by at least one deactivation cylinder group (8), is operated in partially fired fashion, with a reduced fuel quantity in relation to a defined normal mode and/or in relation to a fuel quantity dosed to the at least one warm-up cylinder group, or in non-fired fashion,
**characterized**
**in that**, in the warm-up mode, the air supply line (39) assigned to the at least one deactivation cylinder group (8) is at least partially shut off by way of at least one air supply shut-off element (34), and the air supply line (38) assigned to the at least one warm-up cylinder group (7) is at least partially opened up by way of at least one air supply shut-off element (33), such that a defined flow rate of a hot exhaust-gas flow passes to the exhaust-gas turbine (10), wherein it is provided that, in the warm-up mode, the air supply line (39) assigned to the at least one deactivation cylinder group (8) is substantially fully shut off by way of the air supply shut-off element (34) assigned thereto, and the air supply line (38) assigned to the at least one warm-up cylinder group (7) is at least partially opened up by way of the air supply shut-off element (33) assigned thereto, such that substantially only the hot exhaust-gas flow from the at least one warm-up cylinder group (7) flows to the exhaust-gas turbine (10), and in that, in the warm-up mode, a recirculation flow from the exhaust line (6) assigned to the at least one deactivation cylinder group (8) to the air supply line (39) assigned to the same deactivation cylinder group (8) is permitted, and/or a recirculation flow from the exhaust line (4) assigned to the at least one warm-up cylinder group (7) to the air supply line (38) assigned to the same warm-up cylinder group (7) is at least partially blocked.

2. The method according to Claim 1, **characterized in that** the fuel quantity that is dosed into the at least one deactivation cylinder group (8) in the warm-up mode is lower, by a defined amount, in particular by at least half, than the fuel quantity that is dosed into the at least one warm-up cylinder group (7).

3. The method according to either of Claims 1 and 2, **characterized in that** the torque contribution of the at least one deactivation cylinder group (8) to the engine torque is less than that of the at least one warm-up cylinder group (7), wherein the torque contribution of the at least one warm-up cylinder group (7) preferably amounts to approximately 70% to 100% of the engine torque, and correspondingly, the torque contribution of the at least one deactivation cylinder group (8) lies approximately between 30% and 0%.

4. The method according to one of Claims 1 to 3, **characterized in that**, in the warm-up mode, a flow rate, predefined in a manner dependent on defined warm-up parameters, of the hot exhaust-gas flow flowing out of the at least one warm-up cylinder group (7) passes, via a bypass line (20), past the exhaust-gas turbine (10) to the exhaust-gas aftertreatment element (16) connected downstream of the exhaust-gas turbine (10).

5. The method according to Claim 4, **characterized in that** at least one hydrolysis catalytic converter (24) is arranged in the bypass line (20),
**in that** a predefined quantity of a reducing agent is metered into the exhaust-gas flow in the bypass line (20) upstream of the at least one hydrolysis catalytic converter (24) by way of a reducing agent metering device (25) at predefined times, and
**in that** the at least one exhaust-gas aftertreatment element (16) connected downstream of the exhaust-gas turbine (10) is formed by at least one SCR catalytic converter, in which a reduction of nitrogen oxides takes place by way of selective catalytic reduction (SCR).

6. The method according to Claim 4 or 5, **characterized in that**, in the case of an exhaust-gas flow branched off via the bypass line (20), an engine braking flap (17) arranged in a turbine discharge line (15) which leads away from the exhaust-gas turbine (10) is at least partially closed.

7. A device for the aftertreatment of an exhaust-gas flow of a multi-cylinder internal combustion engine of a vehicle, for carrying out a method according to one of the preceding method claims,
having an internal combustion engine (2) which has multiple different groups (7, 8) of cylinders, which are assigned in each case one air supply line (38, 39) and one exhaust line (4, 6), wherein the exhaust lines (4, 6) issue, in multi-channel fashion, into an exhaust-gas turbine (10), which is of correspondingly multi-channel form, of an exhaust-gas turbocharger (11), downstream of which there is connected an exhaust-gas aftertreatment element (16),
**characterized in that**
a throttle and/or shut-off device is provided by means of which the air flow through the air supply lines (38, 39) can be influenced,
wherein it is preferably provided that each air supply line (38, 39) is assigned an air supply shut-off element (33, 34) as throttle and/or shut-off device, and that, from at least one of the exhaust lines (4, 6), preferably from all of the exhaust lines, an exhaust-gas recirculation line (27, 28), which can be shut off preferably by means of an exhaust-gas recirculation shut-off element (30), leads back to the air supply line assigned to the same cylinder group (7, 8).

8. The device according to Claim 7, **characterized in that** a control and/or regulation device (18) is provided which actuates the exhaust-gas recirculation and/or air supply shut-off elements (30, 33, 34) in accordance with predefined operating parameters of the internal combustion engine (2), in particular in a manner dependent on defined exhaust-gas aftertreatment element warm-up parameters and/or exhaust-gas recirculation parameters and/or intake air parameters, such that said exhaust-gas recirculation and/or air supply shut-off elements at least partially block or at least partially open up the lines respectively assigned thereto.

9. The device according to either of Claims 7 and 8, **characterized in that** the air supply line shut-off element (33, 34) is arranged upstream of the respective point at which the exhaust-gas recirculation line (27, 28) issues into the respective air supply line (38, 39).

10. The device according to one of Claims 7 to 9, **characterized in that**, from at least one of the exhaust lines (4, 6), preferably from at least one exhaust line (4) which is assigned to a warm-up cylinder group (7), a bypass line (20) which can be shut off by way of a branch shut-off element (22) branches off upstream of the exhaust-gas turbine (10) and issues, downstream of the exhaust-gas turbine (10) and upstream of the exhaust-gas aftertreatment element (16), into a turbine discharge line (15) which leads from the exhaust-gas turbine (10) to the exhaust-gas aftertreatment element (16), wherein, in the turbine discharge line (15), there is preferably arranged a discharge line shut-off element (17), in particular an engine braking flap, and/or, in the bypass line (20), there is preferably arranged at least one bypass line exhaust-gas aftertreatment element (24).

11. The device according to Claim 10, **characterized in that** the bypass exhaust-gas aftertreatment element (24) is formed by at least one hydrolysis catalytic converter,
**in that** a metering device (25) for a reducing agent is provided, by means of which metering device a reducing agent can be metered to the bypass exhaust-gas flow upstream of the at least one hydrolysis catalytic converter, and
**in that** the at least one exhaust-gas aftertreatment element (16) connected downstream of the exhaust-gas turbine (10) is formed by at least one SCR catalytic converter.

## Revendications

1. Procédé de traitement de l'écoulement de gaz d'échappement du moteur à combustion interne à plusieurs cylindres d'un véhicule, en particulier d'un véhicule utilitaire présentant un moteur (2) à combustion interne doté de plusieurs groupes différents de cylindres (6, 7) à chacun desquels est associé un conduit (38, 39) d'amenée d'air et un conduit (4, 6) de gaz d'échappement,
les conduits (4, 6) de gaz d'échappement débouchant en plusieurs flux dans une turbine (10) à gaz d'échappement, comptant le même nombre de flux, d'un turbocompresseur (11) à gaz d'échappement en aval duquel est raccordé un élément (16) de traitement des gaz d'échappement,
tandis que dans un mode de fonctionnement de chauffage du moteur à combustion interne, prédéterminé en fonction de paramètres définis de fonctionnement du moteur (2) à combustion interne, en particulier en fonctionnement à vide ou à faible charge du moteur à combustion interne, une première partie des groupes de cylindres, formée par au moins un groupe (7) de cylindres de chauffage est alimentée dans une mesure prédéterminée et qu'une autre deuxième partie des groupes de cylindres, formée d'au moins un groupe (8) de cylindres de débranchement, est alimentée à un débit de carburant réduit par rapport à un fonctionnement normal défini et/ou par rapport à un débit de carburant injecté dans le ou les groupes de cylindres de chauffage, ou n'est pas alimentée,
**caractérisé en ce que**
en mode de chauffage, le conduit (39) d'amenée d'air associé au groupe ou aux groupes (8) de cylindres de débranchement est bloqué au moins en partie par au moins un élément (34) de blocage de l'amenée d'air et le conduit (38) d'amenée d'air associé au groupe ou aux groupes (7) de cylindres de chauffage est libéré au moins en partie par au moins un élément (33) de blocage de l'amenée d'air de telle sorte qu'un débit défini d'un écoulement de gaz d'échappement chaud s'écoule vers la turbine (10) à gaz d'échappement,
**en ce qu'**en mode de chauffage, le conduit (39) d'amenée d'air associé au groupe ou aux groupes (8) de cylindres de débranchement est bloqué essentiellement complètement par l'élément (34) de blocage de l'amenée d'air qui lui est associé et le conduit (38) d'amenée d'air associé au groupe ou aux groupes (7) de cylindres de chauffage est libéré au moins en partie par l'élément (33) de blocage de l'amenée d'air qui lui est associé de telle sorte qu'essentiellement seul l'écoulement de gaz d'échappement chaud provenant du ou des groupes (7) de cylindres de chauffage s'écoule vers la turbine (10) à gaz d'échappement et
**en ce qu'**en mode de chauffage, un écoulement de retour du conduit (6) de gaz d'échappement associé au groupe ou aux groupes (8) de cylindre de débranchement au conduit (39) d'amenée d'air associé au même groupe (8) de cylindres de débranchement est libéré et/ou un écoulement de retour du conduit (4) de gaz d'échappement associé au groupe ou aux groupes (7) de cylindres de chauffage au conduit (38) d'amenée d'air associé à ce groupe (7) de cylindres de chauffage est au moins en partie bloqué.

2. Procédé selon la revendication 1, **caractérisé en ce que** le débit de carburant injecté en mode de chauffage dans le ou les groupes (8) de cylindre de débranchement est inférieur d'une valeur définie et en particulier d'au moins la moitié au débit de carburant injecté dans le ou les groupes (7) de cylindres de chauffage.

3. Procédé selon l'une des revendications 1 ou 2, **caractérisé en ce que** la contribution du couple de rotation du ou des groupes (8) de cylindres de débranchement au couple de rotation du moteur est inférieure à celle du ou des groupes (7) de cylindres de chauffage, la contribution au couple de rotation du ou des groupes (7) de cylindres de chauffage représentant de préférence environ 70 % à 100 % du couple de rotation du moteur et par conséquent, la contribution au couple de rotation du ou des groupes (8) de cylindres de débranchement représentant environ 30 % à 0 %.

4. Procédé selon l'une des revendications 1 à 3, **caractérisé en ce qu'**en mode de chauffage, un débit prédéterminé en fonction de paramètres de chauffage définis de l'écoulement de gaz d'échappement chaud s'écoulant du ou des groupes (7) de cylindres de chauffage contourne la turbine (10) à gaz d'échappement par l'intermédiaire d'un conduit de dérivation (20) pour aboutir à l'élément (16) de traitement des gaz d'échappement prévu en aval de la turbine (10) à gaz d'échappement.

5. Procédé selon la revendication 4, **caractérisé en ce qu'**au moins un catalyseur d'hydrolyse (24) est disposé dans le conduit de dérivation (20), **en ce qu'**à des instants prédéterminés, un débit prédéterminé d'agent réducteur est ajouté à l'écoulement de gaz d'échappement dans le conduit de dérivation (20) en amont du ou des catalyseurs d'hydrolyse (24) au moyen d'un dispositif (25) d'addition d'agent réducteur et **en ce que** le ou les éléments (16) de traitement de gaz d'échappement prévus en aval de la turbine (10) à gaz d'échappement sont formés d'au moins un catalyseur SCR dans lequel une réduction des oxydes d'azote a lieu par réduction catalytique sélective (SCR).

6. Procédé selon la revendication 4 ou la revendication 5, **caractérisé en ce qu'**au cas où un écoulement de gaz d'échappement est dérivé par le conduit de dérivation (20), un clapet (17) de frein moteur disposé dans un conduit (15) de sortie de turbine qui part de la turbine (10) à gaz d'échappement est fermé au moins en partie.

7. Ensemble de traitement d'un écoulement de gaz d'échappement d'un moteur à combustion interne à plusieurs cylindres d'un véhicule, en vue de la mise en oeuvre d'un procédé selon l'une des revendications précédentes,
l'ensemble présentant un moteur (2) à combustion interne doté de plusieurs groupes différents (7, 8) de cylindres à chacun desquels est associé un conduit (38, 39) d'amenée d'air et un conduit (4, 6) de gaz d'échappement, les conduits (4, 6) de gaz d'échappement débouchant en plusieurs flux dans une turbine (10) à gaz d'échappement, présentant un nombre correspondant de flux, d'un turbocompresseur (11) à gaz d'échappement à la suite duquel est prévu un élément (16) de traitement de gaz d'échappement,
**caractérisé en ce que**
un dispositif d'étranglement et/ou de blocage est prévu pour pouvoir agir sur l'écoulement d'air traversant les conduits (38, 39) d'amenée d'air,
**en ce qu'**il est de préférence prévu qu'à chaque conduit (38, 39) d'amenée d'air soit associé un élément (33, 34) de blocage de l'amenée d'air configuré comme dispositif d'étranglement et/ou dispositif de blocage et
**en ce qu'**un conduit (27, 28) de renvoi des gaz d'échappement apte à être bloqué de préférence au moyen d'un élément (30) de blocage du renvoi des gaz d'échappement renvoie vers le conduit d'amenée d'air associé au même groupe (7, 8) de cylindres depuis au moins l'un des conduits (4, 6) de gaz d'échappement et de préférence de tous les conduits de gaz d'échappement.

8. Ensemble selon la revendication 7, **caractérisé en ce qu'**un dispositif (18) de commande et/ou de régulation est prévu pour commander les éléments (30, 33, 34) de renvoi des gaz d'échappement et/ou de blocage de l'amenée d'air en fonction de paramètres de fonctionnement prédéterminés du moteur (2) à combustion interne et en particulier en fonction de paramètres définis de chauffage de l'élément de traitement de gaz d'échappement, de paramètres de renvoi des gaz d'échappement et/ou de paramètres d'aspiration d'air, de telle sorte qu'ils bloquent au moins partiellement ou libèrent au moins partiellement les conduits qui leur sont associés.

9. Ensemble selon l'une des revendications 7 ou 8, **caractérisé en ce que** l'élément (33, 34) de blocage du conduit d'amenée d'air est disposé en amont de chaque emplacement où débouche le conduit (27, 28) de renvoi des gaz d'échappement dans le conduit (38, 39) d'amenée d'air correspondant.

10. Ensemble selon l'une des revendications 7 à 9, **caractérisé en ce qu'**un conduit de dérivation (20) apte à être bloqué au moyen d'un élément (22) de blocage de dérivation part d'au moins l'un des conduits (4, 6) de gaz d'échappement et de préférence d'au moins un conduit (4) de gaz d'échappement associé à un groupe (7) de cylindres de chauffage en amont de la turbine(10) à gaz d'échappement et débouche en aval de la turbine (10) à gaz d'échappement et en amont de l'élément (16) de traitement de gaz d'échappement dans un conduit (15) de sortie de turbine qui relie la turbine (10) à gaz d'échappement à l'élément (16) de traitement de gaz d'échappement, de préférence un élément (17) de blocage du conduit de sortie, en particulier un clapet de frein moteur étant disposé dans le conduit (15) de sortie de turbine et/ou au moins un élément (24) de traitement des gaz d'échappement de conduit de dérivation étant disposé dans le conduit de dérivation (20).

11. Ensemble selon la revendication 10, **caractérisé en ce que** l'élément (24) de traitement des gaz d'échappement de dérivation est formé par au moins un catalyseur d'hydrolyse,
**en ce qu'**un dispositif de dosage (25) d'agent réducteur est prévu et permet de doser un agent réducteur dans l'écoulement de gaz d'échappement de dérivation en amont du ou des catalyseurs d'hydrolyse et **en ce que** le ou les éléments (16) de traitement des gaz d'échappement prévus en aval de la turbine (10) à gaz d'échappement sont formés d'au moins un catalyseur SCR.
